(19) Europäisches Patentamt

European Patent Office

Office européen des brevets

(11) EP 0 944 183 A1

## (12) EUROPEAN PATENT APPLICATION

(43) Date of publication:
22.09.1999 Bulletin 1999/38

(51) Int. Cl.⁶: H04B 7/185

(21) Application number: 98302031.4

(22) Date of filing: 18.03.1998

(84) Designated Contracting States:
AT BE CH DE DK ES FI FR GB GR IE IT LI LU MC
NL PT SE
Designated Extension States:
AL LT LV MK RO SI

(71) Applicant: ICO Services Ltd.
London W6 9BN (GB)

(72) Inventor: Bains, Navjit Singh
Slough, Berkshire, SL3 7PQ (GB)

(74) Representative:
Read, Matthew Charles et al
Venner Shipley & Co.
20 Little Britain
London EC1A 7DH (GB)

### (54) Satellite resource management

(57)     A method of managing satellite resources for multi-beam satellites in a satellite mobile telephone system, where each region of the Earth's surface can be covered by a number of beams from different satellites, when a single beam would be sufficient to provide the desired level of service. By re-allocating the channel capacity from the non-essential overlapping beams in areas of low traffic demand, such as ocean or desert regions, to beams covering regions having a higher traffic demand, a more efficient overall service can be provided.

EP 0 944 183 A1

## Description

The present invention relates to a method of satellite resource management in a satellite mobile telephone system and to a system for implementing the method, particularly but not exclusively to a method of selectively allocating or denying satellite resources to overlapping beams from different satellites.

Mobile telecommunications systems have been proposed that use satellite communication links between mobile user terminals and conventional terrestrial networks. One network known as the IRIDIUM™ satellite cellular system and described in, for example, EP-A-0 365 885 and US Patent No. 5 394 561 (Motorola), makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed, with an orbital radius in the range of 10-20,000 km; reference is directed to Walker J.G. "Satellite Patterns for Continuous Multiple Whole Earth Coverage" Royal Aircraft Establishment, pp 119-122 (1977). Reference is further directed to the ICO™ satellite cellular system described, for example, in GB-A-2 295 296, and to the ODYSSEY™ satellite cellular system described in EP-A-0 510 789. With these systems, the satellite communication link does not permit communication between adjacent satellites. Instead, a signal from a mobile user terminal such as a mobile handset is directed firstly to the satellite and then to a ground station or satellite access node (SAN), which is connected to a conventional land-based telephone network. This has the advantage that many components of the system are compatible with known digital terrestrial cellular technology such as GSM. Also, simpler satellite communication techniques can be used than with a LEO network.

As well as defining the protocols and procedures required to permit communications between individual user terminals and the rest of the communications network, the satellite system as a whole and the resources available to it, including the available spectrum, must be managed to take account of all operational constraints.

System and resource management covers functions such as traffic planning, spectrum planning and satellite resource planning.

Traffic planning includes, for example, the generation, from historical traffic data, of traffic predictions for each satellite, as well as each satellite beam.

Spectrum planning involves the coordinated use of the available spectrum resources by the satellite constellation and the SANs to optimally meet the traffic predictions. This may involve, for example, the generation, distribution, application and monitoring of system wide frequency plans for the allocation of available spectrum to the satellite constellation.

Satellite resource planning involves the optimisation of satellite resources, including power and bandwidth in the various satellite transponders, which are used for both communications and signalling traffic.

To ensure adequate worldwide coverage, the number of satellites used in a satellite system is such that the coverage areas of the satellites are likely to overlap substantially, so that each user terminal can be accessed via two or more diverse paths to different satellites for most of the time. Such path diversity can be exploited to provide a high quality communications service. For example, where the radio path from a user terminal to one or more of the satellites providing coverage of the area of the user terminal is partly or fully blocked by some obstruction, a diverse path via a different satellite may be able to provide communications.

In accordance with the invention, it has been recognised that, if the overlap of coverage areas occurs in an area of low traffic demand, for example in a desert, ocean or polar region, then satellite resources are wasted by providing such overlapping coverage, when coverage by a single satellite would be sufficient. Any satellite resources which could be freed up in such areas could then be redirected to serve regions of high traffic demand, therefore producing a more efficient service overall.

It has been further recognised that in a satellite system where coverage is provided by multiple beams per satellite, such resource management can be carried out by selectively allocating and/or denying resources to satellite beams, and therefore effectively switching off beams in particular satellites so as to minimise beam overlap in low traffic regions.

In addition, it has been appreciated that, in certain circumstances, the resources available to a beam can be denied or re-allocated even when there are no overlapping beams, so that no service will be available in the region covered by that beam. This may be advantageous when, for example, a beam is located over an area where no traffic is expected, such as a polar region, while other beams from the same satellite are located over regions of very high traffic demand.

According to the present invention, there is provided a method of satellite resource management for an orbiting satellite in a satellite mobile telephone system, the satellite having a plurality of beams to provide coverage of regions on the Earth's surface, each region being associated with a satellite resource level requirement, comprising determining the resource level requirements of regions in which the beams provide coverage, and producing a resource allocation plan, such that, when the plan is implemented, resources are allocated to beams covering regions of relatively high resource level requirement in preference to regions of relatively low resource level requirement.

The resource allocation plan may include a re-allocation plan such that, when the plan is implemented, resources are re-allocated from beams covering regions of relatively low resource level requirement to beams covering regions of relatively high resource level requirement.

The satellite mobile telephone system may include a plurality of satellites each having a plurality of beams to provide coverage of regions on the Earth's surface, and coverage in a region may be provided by overlapping beams from different satellites.

A method according to the invention may include selectively denying resources to at least one of the overlapping beams, or selectively allocating resources to the overlapping beams so as not to exceed the resource level requirement in the overlap region, or selectively re-allocating resources from the or each overlapping beam to beams covering regions of relatively high resource level requirement.

A method according to the invention may further include denying resources to or re-allocating resources from the or each overlapping beam such that the remaining resources meet the satellite resource level requirement in each region.

The present invention alternatively provides a method of satellite resource management for an orbiting satellite in a satellite mobile telephone system, the satellite having a plurality of beams to provide coverage of regions on the Earth's surface, each region being associated with a satellite resource level requirement, comprising determining the resource level requirements of regions in which the beams provide coverage, and producing a resource allocation plan, such that, when the plan is implemented, resources are denied to beams covering regions of relatively low resource level requirement.

The present invention also provides a method of satellite resource management in a satellite mobile telephone system having a plurality of orbiting satellites, each having a plurality of beams to provide coverage of regions on the Earth's surface, the regions being associated with a satellite resource level requirement, comprising determining the resource level requirements of regions in which the beams provide coverage, and allocating resources to beams covering regions of relatively high resource level requirement in preference to regions of relatively low resource level requirement.

The present invention further provides a satellite mobile telephone system comprising a plurality of orbiting satellites, each having a plurality of beams to provide coverage of regions on the Earth's surface, means for associating regions on the Earth's surface with a satellite resource level requirement, means for determining the resource level requirements of regions in which the beams provide coverage, and means for allocating resources to beams covering regions of relatively high resource level requirement in preference to regions of relatively low resource level requirement.

Embodiments of the present invention will now be described, by way of example, with reference to the accompanying drawings, in which:

Figure 1 is a schematic diagram of the physical components of a satellite mobile telephone system;
Figure 2 shows the beam pattern in the ICO™ satellite mobile telephone system;
Figure 3 is a more detailed diagram of the different types of spot beams in the beam pattern of Figure 2;
Figure 4 shows a mobile user terminal partially cut away;
Figure 5 is a more detailed block diagram of a SAN and the NMC of Figure 1;
Figure 6a shows an extract of a Burst Time Frequency Plan;
Figure 6b shows an extract of a Channelisation Plan;
Figure 7 is a block diagram of the signal processing circuitry of the satellite payload;
Figure 8 shows the overlap in satellite coverage at an instant in time;
Figure 9 illustrates a simplified situation in which a beam pattern is produced by two sets of overlapping 5-beam patterns from two separate satellites; and
Figure 10 shows the effective beam pattern after reallocation of channels for the beam pattern of Figure 9.

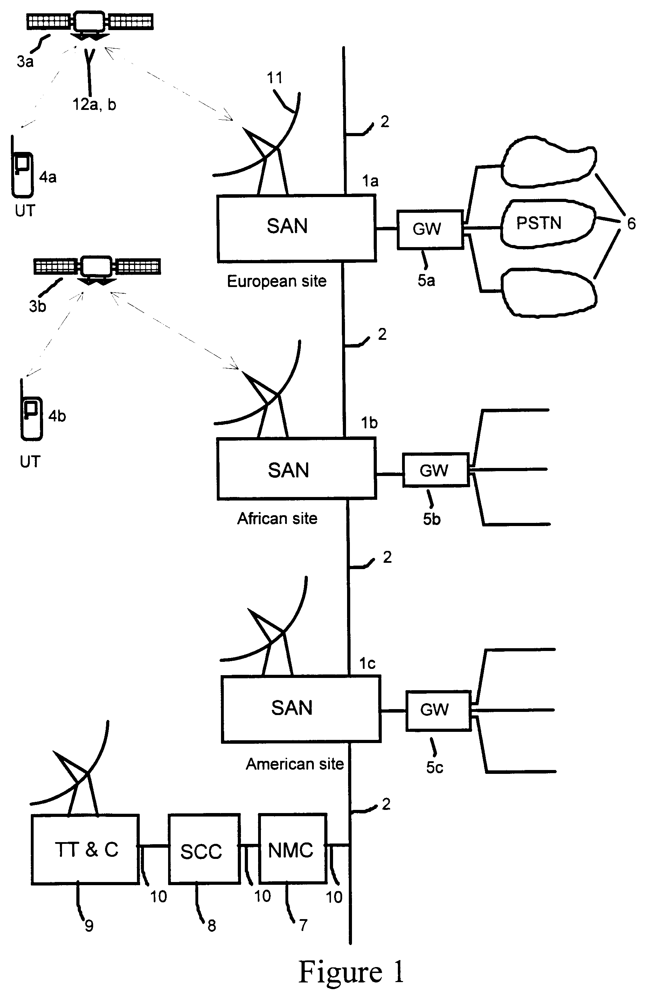

Referring to Figure 1, a satellite mobile telephone system comprises a plurality of satellite access nodes (SAN) 1a, 1b, 1c interconnected by a high capacity digital network 2 ("the backbone network"), a plurality of satellites 3a, 3b, a plurality of user terminals (UT) 4a, 4b, gateways (GW) 5a, 5b, 5c providing connections between the SANs 1a, 1b, 1c and other networks 6, a network management centre (NMC) 7, a satellite control centre (SCC) 8 and a tracking, telemetry and control station (TT&C) 9. The NMC 7, the SCC 8 and the TT&C 9 are interconnected by a lower capacity digital network 10 which is also connected to the backbone network 2. The other networks 6 comprise the public switched telephone network (PSTN), terrestrial cellular telephone networks and the like.

The SCC 8 and the TT&C 9 control the operation of the satellites 3a, 3b, for instance setting transmit power levels and transponder input tuning, as directed by the NMC 7. Telemetry signals from the satellites 3a, 3b are received by the TT&C 9 and processed by the SCC 8 to ensure that the satellites 3a, 3b are functioning correctly.

During a telephone call, a UT 4a, 4b communicates with SAN 1a, 1b via the satellites 3a, 3b using a TDMA scheme over a link comprising a downlink channel and an uplink channel. The channels comprise TDMA time slots on frequencies allocated on initiation of the call or reallocated during a call.

The satellite network is designed to provide worldwide coverage, so the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle with respect to a user terminal, one satellite can be accessed by a UT all of the time and two satellites can be accessed for at least 80% of the time, thereby providing system diversity. Further satellites may be included in the constellation in order to provide additional redundancy and diversity.

The satellites are typically arranged in a medium earth orbit (MEO) constellation, for example with an orbital radius of 10,355 km, although the invention is not restricted to a particular orbital radius. In this embodiment, satellites 3a, 3b are shown in a common orbit and are tracked by the antenna arrangement 11 of each SAN 1a, 1b, 1c. Typically, each SAN includes four antennas for tracking individual satellites of the constellation, with one spare antenna. The SANs are spaced around the earth in order to provide continuous coverage. In the embodiment shown, SAN 1a may be located in Europe whereas SAN 1b may be located in Africa, SAN 1c in America and other SANs may be located elsewhere. In Figure 1, the SAN 1b is shown communicating with user terminal UT 4b via satellite 3b. For further details of the satellite network, reference is directed to GB-A-2 295 296.

The satellites 3a, 3b are in non-geostationary orbits and comprise generally conventional satellites, such as the known Hughes HS601 model, which have a payload comprising a plurality of satellite transponders including forward and return link communications transponders 12a, 12b, and which may further include features as disclosed in GB-A-2 288 913. The communications transponders provide communications services between the SANs and the UTs in both forward and return directions, linking the feeder link global beam between the satellite and the SANs with the mobile link spot beams between the satellite and the UTs.

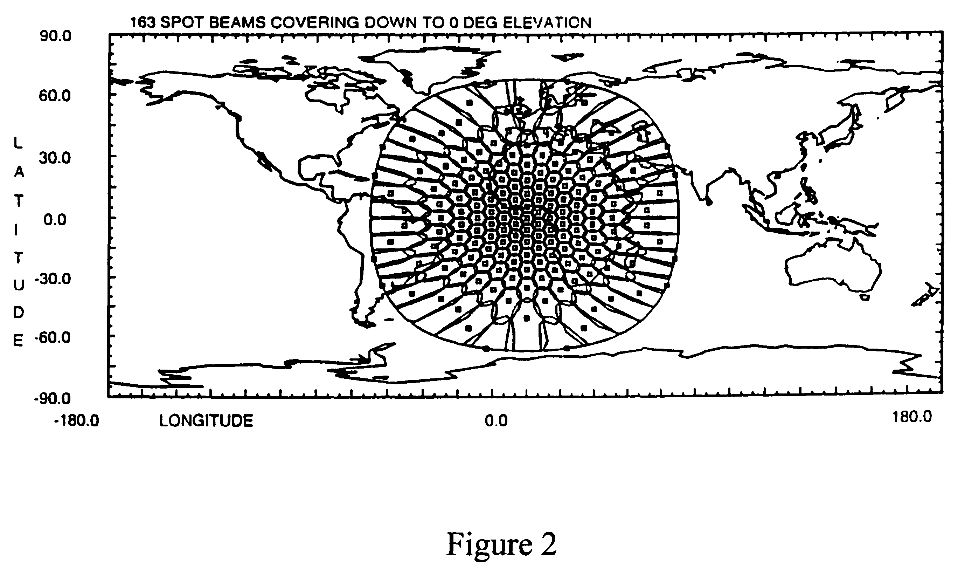

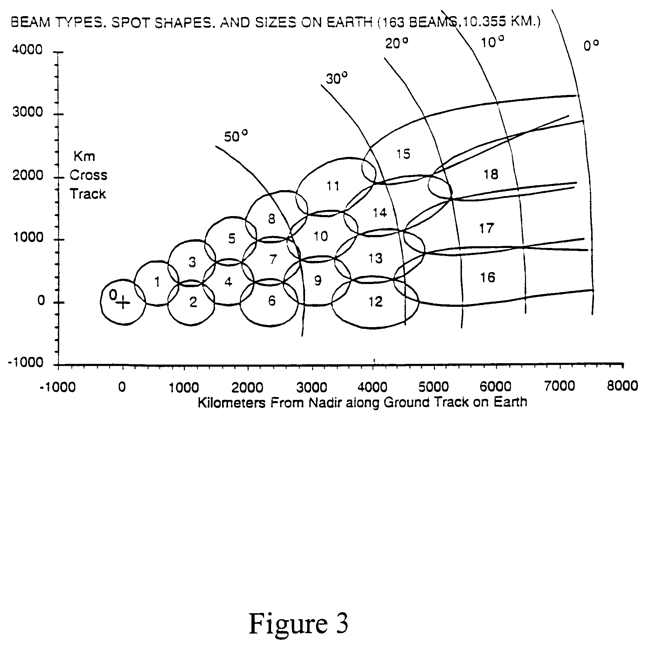

Each satellite 3a, 3b is arranged to generate an array of beams, one for each cell, covering a footprint beneath the satellite, each beam including a number of different frequency channels and time slots. Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

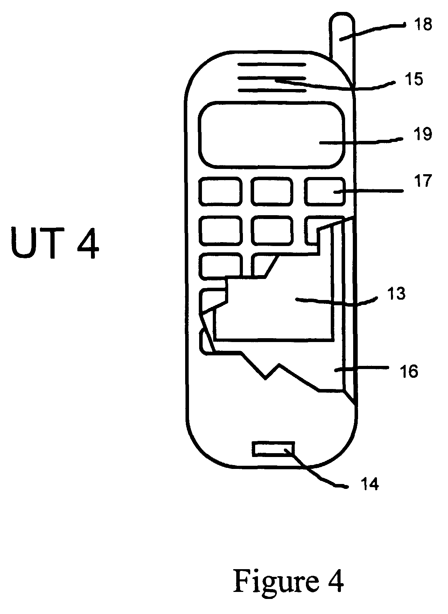

A UT 4a, 4b is shown in more detail in Figure 4 and is generally similar to the units presently available for GSM networks. It comprises a codec (not shown), a controller 13, a microphone 14, a loudspeaker 15, a battery 16, a keypad 17, a radio frequency interface (not shown), an antenna 18, a display 19 and a subscriber identification module (SIM) smart card (not shown).

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The controller 13 comprises a microprocessor and RAM and ROM memory. The microprocessor operates in accordance with a control program stored in the ROM memory. The controller can exchange control and telemetry data with a SAN 1a, b, c using the radio frequency interface.

The SIM includes a processor and a non-volatile memory which stores data identifying the subscriber and data for use in encrypted communication, as well as information relating to system operation, for example, a set of system reference frequencies.

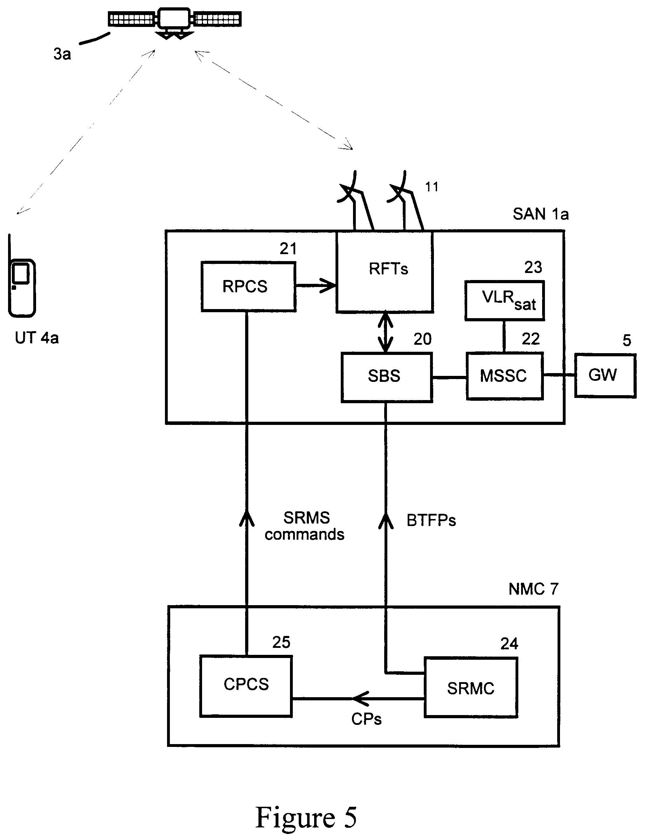

Referring to Figure 5, the configuration of a SAN 1a, 1b, 1c and the NMC 7 is shown in more detail. Each SAN 1a, 1b, 1c consists of a satellite base station SBS 20 which is coupled to the plurality of radio frequency terminals RFT 11 having dish antennas for tracking the satellites 3a. The radio frequency link between the RFTs 11 and the satellite 3a is referred to herein as the feeder link, while the link between the satellite 3a and the UT 4a is referred to as the mobile link. One of the functions of the SBS 20 is to perform real-time resource allocation in response to requests from UTs 4a, 4b.

In some SANs, for example, in 6 out of the 12 SANs in the ICO system, there is a Remote Payload Command System (RPCS) 21 coupled to the RFTs 11, the function of which will be described in detail below. All of the SANs further include a Mobile Satellite Switching Centre (MSSC) 22, which is coupled to the SBS 20 and to a satellite visitor location register $VLR_{SAT}$ 23, which maintains a record of the individual UTs 4a, 4b which are making use of the particular SBS 20. The MSSC 22 provides similar functionality to terrestrial cellular mobile switching centres in managing and controlling the routing of calls between the UT 4a, 4b and the terrestrial networks 6 via the gateway 5.

The NMC 7 includes a Satellite Resource Management Centre (SRMC) 24, connected to each SBS 20, and a Central Payload Command System (CPCS) 25 connected to the RPCS 21 in those SANs which have an RPCS. The SRMC 24, CPCS 25, SBSs 20 and RPCSs 21 together form part of the Satellite Resource Management System (SRMS), whose functions include the generation of frequency plans for the overall satellite constellation and managing the sharing of satellite resources among the various SANs. In addition, the SRMS controls the satellite transponder configurations. These functions are carried out so as to optimise the use of the available spectrum in accordance with the instantaneous demand of all SANs.

The SRMC 25 centrally plans, in non-real time, how the frequency, TDMA time slot and satellite power resources should be managed for optimum efficiency, based on the predicted traffic demands of the various SANs. It analyses historical traffic data together with satellite ephemeris data, available frequencies and so on, to generate frequency plans, referred to herein as Burst Time Frequency Plans (BTFPs), to enable the overall satellite constellation to meet expected traffic requirements, as well as generating satellite transponder configuration plans, referred to herein as channelisation plans (CPs) to match the BTFPs. Since the preparation of the BTFPs and corresponding CPs requires extensive information exchange between distant elements of the system, these plans are generated in advance, for example, once per day, although the frequency with which these plans are generated or updated depends on a number of factors including traffic demand patterns and in particular the frequency of occurrence of unexpected traffic demands. It is envisaged that, in certain circumstances, plan updating may need to occur much more frequently.

Once prepared, a BTFP is sent to the SBS 20 in each SAN 1a, 1b, 1c in non-real time. Real-time time slot and frequency allocations are then made by the SBS 20, for use by each satellite spot beam, in response to requests from the UTs 4a.

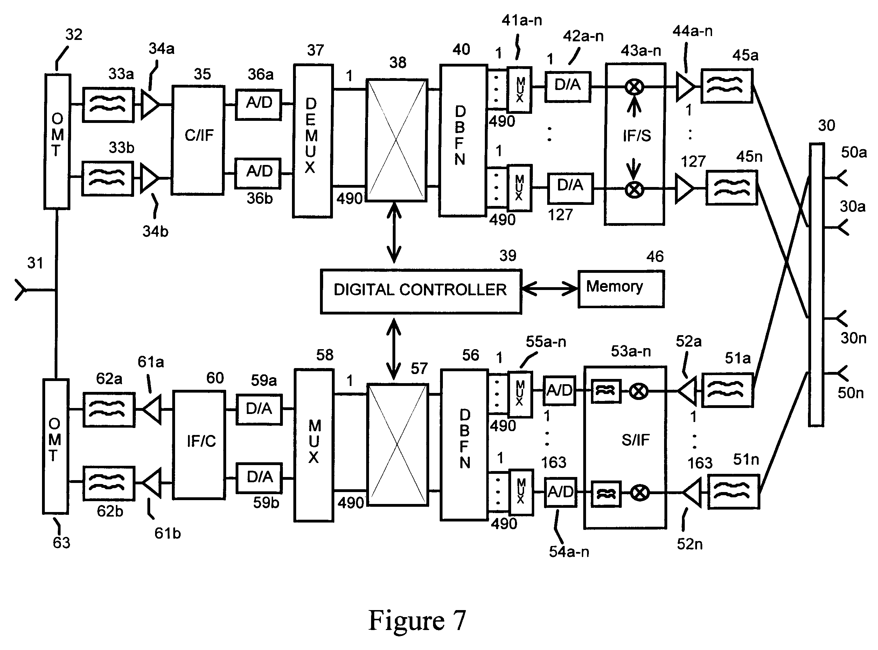

To ensure that the satellite transponders are configured to implement the plan set out in the BTFP, the CPs produced by the SRMC 24 are sent, in non-real time, to the CPCS 25, where they are converted into a series of instructions, referred to herein as SRMS commands, for controlling the satellite transponders. The SRMS commands for each satellite are communicated to one nominated RPCS 21 at a SAN 1a, 1b, 1c in the coverage of each satellite, from where they are uploaded via the RFT 11 to the relevant satellites via a dedicated SRMS transponder. At the satellite, the SRMS commands are received into a memory 46, shown in Figure 7. When implemented at the satellite, the SRMS commands ensure that the satellite's signal processing circuitry is correctly set up to deal with the traffic demands of the UTs, in accordance with the BTFPs developed on the ground.

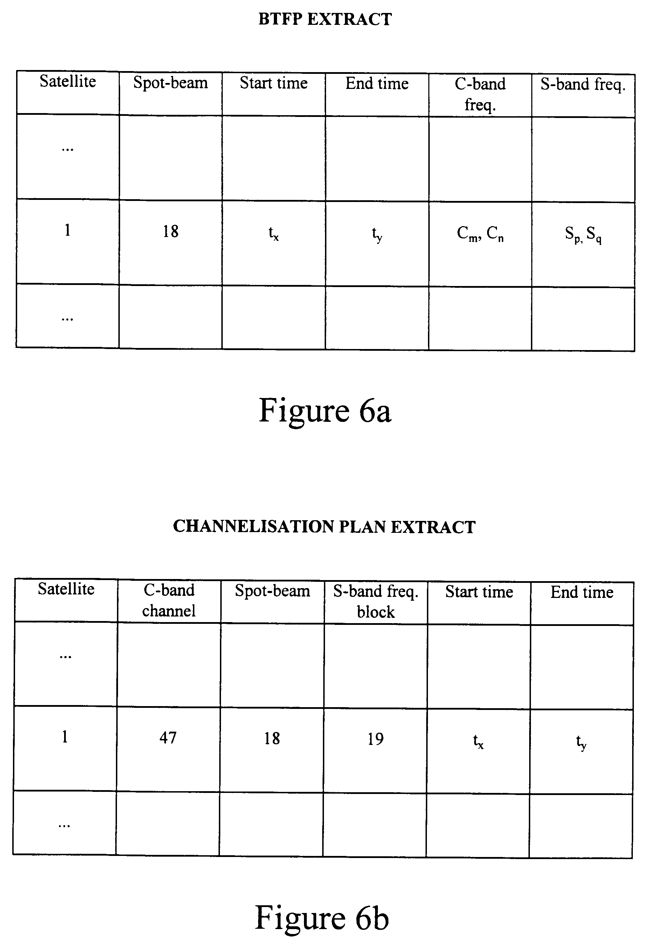

For example, Figure 6a shows an extract from a BTFP stored at an SBS 20. When a UT 4a requires resources, it sends an access request signal to the SBS 20 on a random access channel (RACH) in a prescribed time slot on a prescribed RACH carrier frequency, depending on the spot-beam which is providing coverage of the UT location. The SBS 20 can therefore determine both the satellite and the spot-beam carrying the access request, and knowing the current time can look up the appropriate line entry in the BTFP to determine the frequencies available for communication between the UT 4a and the SBS 20. Two frequencies are given in the BTFP illustrated: a C-band frequency, which is the frequency of operation of the feeder link, and an S-band frequency, which is the frequency of operation of the mobile link.

In the feeder link, communications signals occupy a 100MHz bandwidth in the C-band between 5150 - 5250MHz Earth-to-Space and 6975 - 7075MHz Space-to-Earth. The 100MHz feeder link bandwidth is channelised into 490 channels of 170kHz operational bandwidth (150kHz + 2*10kHz guard bands for on-ground doppler correction), each of which correspond to a particular C-band frequency.

The mobile link operates over a 30MHz bandwidth in the S-band between 2170 - 2200MHz Space-to-Earth and 1980 - 2010MHz Earth-to-Space. The 30MHz bandwidth is subdivided into 200 blocks of 150kHz bandwidth, each block being capable of carrying a total of 6 traffic and/or signalling channels centred on carrier frequencies which are multiples of 25kHz.

Each of the 490 C-band channels is tuneable across the full 30MHz available for the mobile link and is switchable to any mobile link spot-beam.

For example, referring again to Figure 6a, for a UT 4a located in the coverage of satellite 1, beam 18, at a time T between $t_x$ and $t_y$, the BTFP indicates that frequencies $C_m$, $C_n$, and $S_p$, $S_q$ are available. The SBS 20 can therefore allocate a frequency pair, for example, $[C_m, S_p]$ to the UT 4a, leaving the $[C_n, S_q]$ frequency pair available for use by another UT in that spot-beam.

For this allocation to be effective, the satellite transponder in satellite 1 must be configured to match the BTFP, so that, for example, for the time interval between $t_x$ and $t_y$, it is capable of switching messages received from the UT 4a in spot-beam 18 at a frequency $S_p$, to a C-band channel at a frequency $C_m$ for transmission to the SBS 20, and vice-versa. Figure 6b shows the CP extract corresponding to the BTFP extract in Figure 6a. Channel 47 (of 490) is assumed to be associated with frequency $C_m$, so that the CP for satellite 1 indicates that between $t_x$ and $t_y$, channel 47 is to be tuned to spot-beam 18 at a frequency $S_p$, which covers, for example, frequency block 19 of the 200 possible 150kHz frequency blocks. Each channel can be allocated to one of the 200 available 150kHz blocks to cover the full 30MHz range, with frequency re-use in spaced beams to permit allocation of a frequency block to each of the 490 channels.

The processing circuitry at the satellite which is required to implement the above scheme need only implement a 'bent-pipe' or transparent transponder arrangement, in which connectivity is provided for signals to be relayed between UTs in any spot beam and any SBS in the global beam. An example of a possible implementation based on a digital beam forming network is shown in Figure 7. Reference is also directed to GB-A-2288913, which is based on an analogue beam forming network.

Referring to Figure 7, the array of spot beams for the mobile link is generated by a combined Tx/Rx direct radiating antenna (DRA) 30 capable of operating in the S-band. The beams are formed using a digital beam forming network which feeds the individual radiating elements 30a - n of the DRA antenna 30, as described in more detail below.

On the feeder link side, shaped global beam antennas 31 are used which are capable of operating in the C-band. The 100MHz of feeder link bandwidth is provided using 50MHz of spectrum with dual polarisation.

The global beam antenna 31 receives the dual polarised C-band signals from an SBS 20. The signals are passed to an orthogonal mode transducer (OMT) 32, which separates them into left and right circularly polarised signals, each of which are band-pass filtered by respective filters 33a, b and amplified by low-noise amplifiers 34a, b. The respective signals are then down-converted from the C-band to an intermediate frequency (IF) by a C/IF converter circuit 35. The IF signals are digitised by A to D converters 36a, b and then demultiplexed into 490 separate 170kHz channels by a demultiplexer 37 comprising a fixed array of tuned bandpass filters. The 490 channels are then fed to a switching network 38 which is controlled by a digital controller 39, the operation of which is described in detail below. The switching network 38 switches the 490 inputs to the appropriate inputs of a digital beam forming network (DBFN) 40, as determined by the digital controller 39.

The DBFN 40 individually beam forms the 490 channels and connects these to a plurality of multiplexers 41a - n corresponding to the number of radiating elements in the DRA 30. In this embodiment, the DRA 30 comprises 127 radiating elements 30a - n, so that there are correspondingly 127 multiplexers 41a - n, each multiplexer having 490 inputs. The function of the DBFN 40 is to apply the appropriate amplitude and phase weightings to the 490 input channels so as to produce the 163 spot-beams with the channel arrangement specified by the digital processor 39. The principles of beam forming networks are well known: for example, reference is directed to GB-A-2288913 for an explanation of beam forming principles.

The output from each multiplexer 41a - n is passed through a respective D to A converter 42a - n and then up-converted from the IF band to the S-band by respective IF/S converters 43a - n. Each signal is then amplified by a respective power amplifier 44a - n, bandpass filtered by respective filter 45a - n, from where it is connected to a respective radiating element 30a - n. The resulting action of each of the 127 energising signals on the DRA radiating elements is such that 163 spot beams are formed, with 490 traffic and signalling channels distributed between them corresponding to the BTFP plans developed by the SRMS.

To ensure that each beam contains the appropriate channels and frequencies for communication with UTs on the surface of the Earth, the digital processor 39 controls the switching network 38 in accordance with the SRMS commands uploaded from an RPCS 21 and stored in a memory 46, which can be a buffer memory of the digital processor 39, capable of storing, for example, 32,000 such commands. The SRMS commands derived from the CPs produced at the SRMC 24 specify the association between channels, beams and frequencies and the time interval for which the particular configuration is valid.

The digital processor 39 steps through the SRMS commands in the memory 46, in accordance with an internal clock, and for each time interval $\Delta t$, it instructs the switching network to frequency convert or shift each of the 490 channels to a particular IF frequency and to route each channel to an appropriate input in the DBFN, such that after beam forming, it is associated with a particular beam. For example, in accordance with the BTFP and CP set out in Figures 6a and 6b, an SRMS command for satellite 1 may specify that at a time $T = t_x$, until $T = t_y$, channel 47 (of 490) is to be allocated to beam 18 at frequency block 19. In this way, any of the 490 channels can be switched to any mobile link beam in accordance with the BTFP plans developed on the ground.

On the return link, essentially the reverse process occurs to that on the forward link. Signals from UTs based on Earth are received by 163 receiving elements 50a - n of the DRA 30. The signal from each element is bandpass filtered by a respective filter 51a - n, amplified by a respective low-noise amplifier 52a - n and converted from the S-band to an intermediate frequency by a respective S/IF converter 53a - n. The signal is then digitised by a respective A to D converter 54a - n and passed to a respective demultiplexer 55a - n. This demultiplexes the signal into its 490 constituent signals and feeds it with the demultiplexed signals from the other 162 elements into a DBFN 56. The DBFN generates 490 channels which are switched and frequency converted by a switching network 57, under the control of the digital processor 39, to produce 490 170kHz channels. These are frequency multiplexed together in a multiplexer 58 to produce two digital IF signals, which are passed through respective D to A converters 59a,b, converted to the C-band by an IF/C converter 60, amplified by respective power amplifiers 61a, b, band-pass filtered by dual polarisation filters 62a, b and processed by an orthogonal mode transducer (OMT) 63 before being transmitted to SBSs in the global beam via the global beam antenna 31.

Nominally, of the 490 available channels, one channel per beam is allocated for signalling traffic, leaving 327 channels for carrying communications traffic to be distributed between the 163 spot beams. Assuming that each beam is carrying some communications traffic, at least 163 further channels are allocated to that traffic, leaving at most 164 channels free, which can be allocated in accordance with traffic demands.

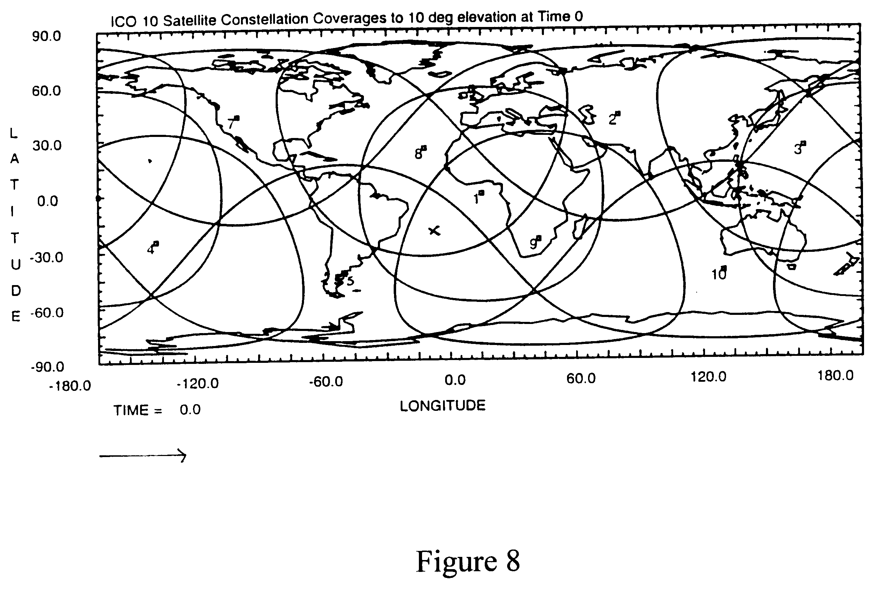

Because of the wide coverage produced by each satellite, the coverage areas of the satellites overlap. Since the satellites 3a, 3b are in a non-geostationary orbit, the area of overlap between the satellites changes with time as the satellites move. Figure 8 shows the coverage areas of the satellite constellation at an instant in time, T = 0, the boundaries of the coverage areas being defined for a satellite elevation of 10° or more. The overlap between the coverage areas is greater for elevations below 10°.

Referring to Figure 8, it is apparent that at a point X, arbitrarily chosen, beams originating from satellites numbered 1, 5, 8 and 9 overlap. Point X lies in an ocean region so that coverage from just one satellite is likely to meet the traffic demands of that region. Any of the satellites 1, 5, 8 and 9 can be chosen to provide this coverage, but the optimal choice will depend on a number of factors, which may include current and predicted traffic loadings for each satellite, satellite ephemeris data as well as the nature of the other regions covered by the beams in each of the satellites. For example, if the entire satellite beam pattern is simplistically assumed to move to the right (ie. in the direction of the arrow in Figure 8), then point X will quickly move out of the coverage of satellites 1, 8 and 9. In this case, a reasonable option may be to assign coverage to satellite 5, so as to minimise the need for beam handover between satellites for a greater period of time.

Once a satellite is selected to provide coverage, the allocation of signalling and/or traffic channels in the overlapping beams of the other three satellites can then be withdrawn, since the corresponding channels are no longer required to monitor user terminals in the relevant region. The freed resources can therefore be re-allocated to other beams in each respective satellite which cover regions with a higher traffic demand. The re-allocation is performed at the SRMC 24 by producing a new BTFP and channelisation plan and uploading the corresponding SRMS commands to the relevant satellites via the relevant RPCS 21. For example, taking the allocation above of channel 47 to beam 18 at frequency block 19 at time $T = t_x$, the re-allocation may take the form of a further SRMS command that, for example, at time $T = t_y$, channel 47 in satellite 1 be allocated to beam 121 at frequency block 191. After uploading, when the processor 39 on board the relevant satellite steps through to $T = t_y$, it re-allocates channel 47 to beam 121.

The determination of how beams overlap and which beams can be re-allocated is performed by the SRMS which is aware of the position of the satellite constellation at all times in relation to the Earth. The SRMS calculates the latitude and longitude coordinates of the centre of each beam together with the coordinates of sets of 6 vertices defining the irregular hexagon shaped beam spot coverage areas. As well as this, it calculates several rates in kilometres/minute at which the beam spots move over the Earth's surface. This information is periodically broadcast to user terminals to allow them to predict the future time of their next beam or satellite handover.

Knowing the absolute position of each beam allows a determination of the region of the Earth's surface underlying that beam. A map of traffic demand corresponding to various regions is produced in advance based on type of terrain, for example, ocean, desert and polar regions for low traffic demand and land regions for high traffic demand, as well as on traffic predictions based on past traffic profiles. This map is used to determine the level of resources required in each region.

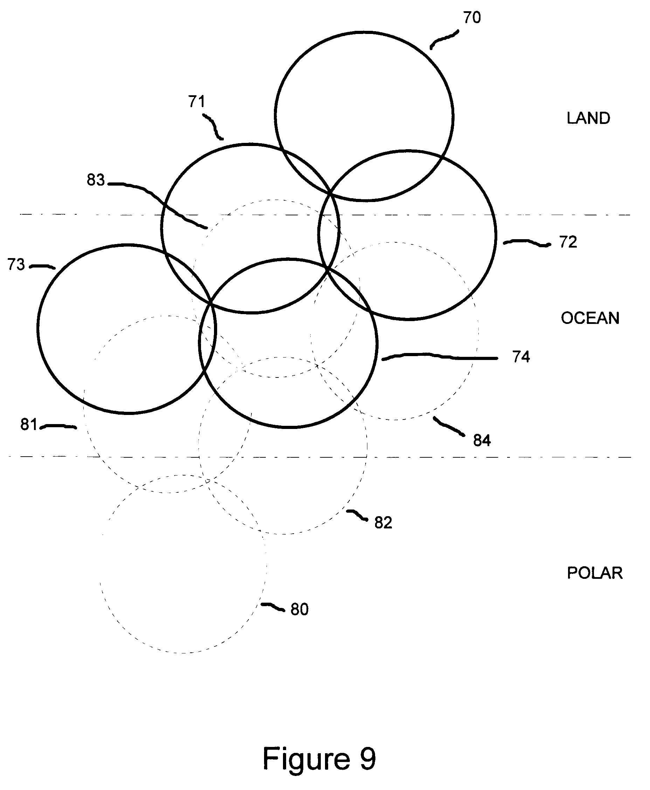

Figure 9 allows a simplified explanation of the operation of an embodiment of the invention, and shows a first set of beams 70 - 74 from a first satellite 3a overlapping with a second set of beams 80 - 84 (shown in dotted outline) from a second satellite 3b. The beam patterns are spread over land, sea and polar regions. Beams 70 and 80 are the only beams which do not overlap with a beam from the other satellite. Beams 74 and 83 are the only beams which overlap entirely with beams from the other satellite, so that, for example, the region covered by beam 83 is also covered by a combination of beams 71 - 74. Beams 71 to 73 and 81, 82 and 84 all overlap partially with beams from the other satellite.

Each beam is assumed to be allocated a single nominal traffic channel. Prior to implementing the method of the invention so as to re-allocate satellite resources, it is assumed that the predetermined level of resources required by each region specified is as follows:

Land: as many channels as are available subject to a minimum of 1.
Ocean: minimum 1 channel.
Polar: minimum 0 channels.

Beam 70 has a single allocated channel. If possible, the number of channels to this land-based beam should be increased. Channels from beams 71 - 73 cannot be re-allocated, since this would violate the minimum requirement of at least one channel in an ocean region. However, the region covered by beam 74 is also covered by beams 81 - 84 so the channel associated with beam 74 can be re-allocated to beam 70, giving beam 70 two channels while still leaving at least one channel in each of the ocean regions. Since this leaves beam 74 with no associated channel, the effect is the same as switching the beam 74 off.

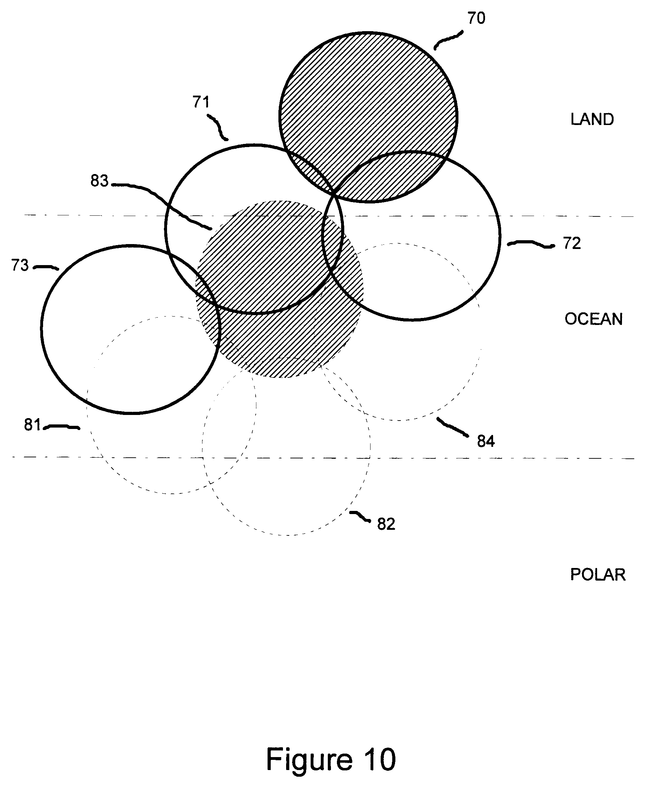

Part of the coverage of beam 83 lies on land. The resource level requirements specified in this case can therefore be better met if the nominal channel allocated to beam 80 in the polar region is reallocated to beam 83. The resulting effective allocations of the beam patterns are shown in Figure 9, with the filled beams 70, 83 indicating an allocation of 2 channels, and with beams 74, 80 with no channel allocation not being shown, since these are effectively switched off. Figure 10 shows the effective shift in the beam pattern towards the more traffic intensive land region.

Beams 71, 72 are also partly land-based beams either of which could have been allocated the spare channel from beam 74. However, in this case, the allocation was carried out on the basis that beam 70 covers a much larger land-region than beams 71 or 72.

If beam 80 lay in a land rather than a polar region, a further option would be introduced, namely whether to reallocate the channel from beam 83 to beam 80 in preference to re-allocating the channel from beam 74 to beam 70. The choice can be resolved by considering a number of factors, including for example the predicted traffic demand in each land region and/or the next regions to be encountered as a result of satellite motion, with a view to minimising the amount of channel switching and therefore processing power required.

While a centralised system is one way of performing resource planning for the entire satellite constellation, a number of other possible methods are envisaged, each of which may have their own particular advantages in particular system architectures. For example, in a distributed architecture, the allocation of resources to a given satellite can be managed directly by the SBSs in real time, via inter-SBS transponders at the satellite, without the intervention of the central SRMC.

Alternatively, in a sub-centralised architecture, the allocation of resources may be managed by a master SBS (MSBS), with any SBS needing resources sending a request to the MSBS through the inter-SBS transponders. The function of the MSBS is handed over between SBSs as the satellite moves in the orbit.

## Claims

1. A method of satellite resource management for an orbiting satellite in a satellite mobile telephone system, the satellite having a plurality of beams to provide coverage of regions on the Earth's surface, each region being associated with a satellite resource level requirement, comprising:

   determining the resource level requirements of regions in which the beams provide coverage; and
   producing a resource allocation plan, such that, when the plan is implemented, resources are allocated to beams covering regions of relatively high resource level requirement in preference to regions of relatively low resource level requirement.

2. A method according to claim 1, wherein the resource allocation plan includes a re-allocation plan such that, when the plan is implemented, resources are reallocated from beams covering regions of relatively low resource level requirement to beams covering regions of relatively high resource level requirement.

3. A method according to claim 1 or 2, wherein the satellite mobile telephone system includes a plurality of satellites each having a plurality of beams to provide coverage of regions on the Earth's surface, wherein coverage in a region is provided by overlapping beams from different satellites.

4. A method according to claim 3, including selectively denying resources to at least one of the overlapping beams.

5. A method according to claim 3, including selectively allocating resources to the overlapping beams so as not to exceed the resource level requirement in the overlap region.

6. A method according to any one of claims 3 to 5, including selectively re-allocating resources from the or each overlapping beam to beams covering regions of relatively high resource level requirement.

7. A method according to any one of claims 4 to 6, including denying resources to or re-allocating resources from the or each overlapping beam such that the remaining resources meet the satellite resource level requirement in each region.

8. A method according to any one of claims 4 to 7, wherein resources are denied to or re-allocated from beams in the satellite having the largest number of beams covering regions of relatively high resource level requirement.

9. A method according to any one of the preceding claims, wherein the resource level requirement is specified as the number of channels required to provide coverage in a given region.

10. A method according to any one of claims 1 to 8, wherein the resource level requirement is specified as the number of beams required to provide coverage in a given region.

11. A method according to claim 10 when dependent on claim 3, wherein a single beam is specified as being required to provide coverage in a region covered by overlapping beams.

12. A method according to any one of the preceding claims, wherein a region of relatively low resource level requirements includes a desert, ocean or polar region.

**13.** A method according to any one of the preceding claims, including uploading data required to implement the allocation plan to the or each satellite.

**14.** A method of satellite resource management for an orbiting satellite in a satellite mobile telephone system, the satellite having a plurality of beams to provide coverage of regions on the Earth's surface, each region being associated with a satellite resource level requirement, comprising:

determining the resource level requirements of regions in which the beams provide coverage; and
producing a resource allocation plan, such that, when the plan is implemented, resources are denied to beams covering regions of relatively low resource level requirement.

**15.** A method according to claim 14, including allocating denied resources to beams in accordance with traffic demands.

**16.** A method of satellite resource management in a satellite mobile telephone system having a plurality of orbiting satellites, each having a plurality of beams to provide coverage of regions on the Earth's surface, the regions being associated with a satellite resource level requirement; comprising:

determining the resource level requirements of regions in which the beams provide coverage; and
allocating resources to beams covering regions of relatively high resource level requirement in preference to regions of relatively low resource level requirement.

**17.** A method according to claim 16, including re-allocating resources from beams covering regions of relatively low resource level requirement to beams covering regions of relatively high resource level requirement.

**18.** A satellite mobile telephone system comprising:

a plurality of orbiting satellites, each having a plurality of beams to provide coverage of regions on the Earth's surface, the regions being associated with a satellite resource level requirement;
means for determining the resource level requirements of regions in which the beams provide coverage; and
means for allocating resources to beams covering regions of relatively high resource level requirement in preference to regions of relatively low resource level requirement.

Figure 1

163 SPOT BEAMS COVERING DOWN TO 0 DEG ELEVATION

Figure 2

BEAM TYPES. SPOT SHAPES. AND SIZES ON EARTH (163 BEAMS, 10.355 KM.)

Figure 3

UT 4

Figure 4

Figure 5

**BTFP EXTRACT**

| Satellite | Spot-beam | Start time | End time | C-band freq. | S-band freq. |
|---|---|---|---|---|---|
| ... | | | | | |
| 1 | 18 | $t_x$ | $t_y$ | $C_m, C_n$ | $S_p, S_q$ |
| ... | | | | | |

# Figure 6a

**CHANNELISATION PLAN EXTRACT**

| Satellite | C-band channel | Spot-beam | S-band freq. block | Start time | End time |
|---|---|---|---|---|---|
| ... | | | | | |
| 1 | 47 | 18 | 19 | $t_x$ | $t_y$ |
| ... | | | | | |

# Figure 6b

Figure 7

EP 0 944 183 A1

ICO 10 Satellite Constellation Coverages to 10 deg elevation at Time 0

TIME = 0.0

Figure 8

EP 0 944 183 A1

Figure 9

Figure 10

**European Patent Office**

## EUROPEAN SEARCH REPORT

Application Number

EP 98 30 2031

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 671 823 A (MOTOROLA INC) 13 September 1995<br>* page 8, line 34 - line 43; figures 8,10,11,13,15 * | 1-3,9, 10,12-18 | H04B7/185 |
| Y | * page 9, line 55 - page 10, line 10 *<br>* page 11, line 16 - page 12, line 20 * | 4-7 | |
| Y | US 5 612 701 A (DIEKELMAN DENNIS P) 18 March 1997 | 4-7 | |
| X | * column 4, line 37 - column 6, line 33; figures 5-9,11 *<br>* column 10, line 35 - line 47 * | 16,18 | |
| X | WO 96 19905 A (MOTOROLA INC) 27 June 1996<br><br>* page 2, line 26 - line 36 *<br>* page 6, line 23 - page 9, line 2; claims 1,7; figure 6 * | 1-3,9, 13,16,18 | |
| X | EP 0 652 649 A (MOTOROLA INC) 10 May 1995<br>* abstract; claim 1; figure 14 * | 1-3,9,13 | |

TECHNICAL FIELDS SEARCHED (Int.Cl.6)

H04B

The present search report has been drawn up for all claims

| Place of search | Date of completion of the search | Examiner |
|---|---|---|
| MUNICH | 23 July 1998 | Burghardt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 98 30 2031

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-1998

| Patent document cited in search report | | Publication date | Patent family member(s) | | Publication date |
|---|---|---|---|---|---|
| EP 0671823 | A | 13-09-1995 | US | 5555444 A | 10-09-1996 |
| | | | CA | 2141232 A | 12-09-1995 |
| | | | JP | 7273708 A | 20-10-1995 |
| US 5612701 | A | 18-03-1997 | FR | 2738980 A | 21-03-1997 |
| | | | GB | 2305578 A | 09-04-1997 |
| | | | IT | RM960611 A | 09-03-1998 |
| WO 9619905 | A | 27-06-1996 | US | 5594940 A | 14-01-1997 |
| | | | CA | 2207046 A | 27-06-1996 |
| | | | CN | 1170490 A | 14-01-1998 |
| | | | DE | 19581868 T | 04-12-1997 |
| | | | EP | 0799552 A | 08-10-1997 |
| | | | GB | 2311193 A | 17-09-1997 |
| EP 0652649 | A | 10-05-1995 | US | 5590395 A | 31-12-1996 |
| | | | CA | 2134824 A | 11-05-1995 |
| | | | JP | 7193868 A | 28-07-1995 |

EPO FORM P0459

For more details about this annex : see Official Journal of the European Patent Office, No. 12/82